# EUROPEAN PATENT SPECIFICATION

(11) **EP 1 624 171 B1**
(45) Date of publication and mention of the grant of the patent: **12.10.2011**
(21) Application number: 05254810.4
(22) Date of filing: 01.08.2005
(51) Int. Cl.: F02D 37/02, F02P 5/15, F02D 41/02

(54) **Control apparatus and control method for internal combustion engine**
Vorrichtung und Methode zur Steuerung einer Brennkraftmaschine
Dispositif et méthode de commande d'un moteur thermique

(30) Priority: 04.08.2004 JP 2004228053
(43) Date of publication of application: 08.02.2006
(73) Proprietor: Toyota Jidosha Kabushiki Kaisha, Toyota-shi, Aichi-ken, 471-8571 (JP); Bosch Corporation, Tokyo 150-8360 (JP)
(72) Inventor: Amano, Naoki, c/o Toyota Jidosha Kabushiki Kaisha, Toyota-shi, Aichi-ken, 471-8571 (JP); Otsubo, Masaaki, c/o Toyota Jidosha Kabushiki K., Toyota-shi, Aichi-ken, 471-8571 (JP); Yamazaki, Akinori, c/o Bosch Corporation, Tokyo 150-8360 (JP); Hatakeyama, Tomohiro, c/o Bosch Corporation, Tokyo 150-8360 (JP)
(74) Representative: Smith, Samuel Leonard

(56) References cited:
- EP-A- 0 737 598
- GB-A- 524 883
- JP-A- 3 081 537
- US-A1- 2002 055 411

## Description

### BACKGROUND OF THE INVENTION

### 1. Field of the Invention

The invention relates to a control apparatus and a control method for an internal combustion engine. More particularly, the invention relates to a control apparatus and a control method for an internal combustion engine which is connected to an automatic transmission including a constant-mesh gear train.

### 2. Description of the Related Art

Conventionally, when shifting of an automatic transmission is performed, torque of an internal combustion engine is decreased by retarding ignition timing or decreasing a flow rate of air so that shift shock is suppressed for improving driveability.

Japanese Patent Application Publication No. JP-A-9-310627 discloses a torque-down control apparatus which decreases torque without deteriorating driveability while maintaining the level of response of control. The torque-down control apparatus disclosed in the Japanese Patent Application Publication No. JP-A-9-310627 enables control to be performed such that output torque is forcibly decreased by intake air flow rate control when there is a torque-down request during shifting of an automatic transmission, and enables control to be performed such that the output torque is forcibly decreased by at least one of ignition timing control and fuel supply amount control during a response delay period in the intake air flow rate control.

With the torque-down control apparatus disclosed in the publication, delay in response of the intake air flow rate control is compensated for by the ignition timing control and/or the fuel supply amount control, whereby the output torque of the engine can be decreased in quick response to the torque-down request.

Recently, vehicles each of which includes an automatic transmission including a constant-mesh gear train have been sold particularly in Europe. In such a vehicle, the automatic transmission is connected to an internal combustion engine via a clutch. When torque of the internal combustion engine is suddenly changed in a case where the clutch is in the engaged state, shock occurs. Accordingly, when the torque is decreased in quick response to the torque-down request as in the case of the torque-down control apparatus disclosed in the aforementioned publication, an occupant may feel shock, and driveability may deteriorate.

JP 03081537, upon which the precharacterizing portions of appended claims 1 and 5 are based, aims to improve speed change feeling at speed change of a constant-mesh transmission by constituting a device so as to temporarily bring down engine output, according to the detected value of opening and varied quantity of opening of the throttle valve of an internal combustion engine. When a change pedal switch is ON, namely, speed change is performed in a transmission and a throttle valve opening θTH is larger than a prescribed value θO (a throttle valve opening discriminating value to discriminate the tendency of generation of speed change shock due to gear change), ECU computes a throttle valve varied quantity ΔθTH/Δt, and at ΔθTH/Δt > X it is discriminated that the speed change shock is large. In this case, according to the varied quantity AθTH/Δt, correcting value of ignition timing is instituted large. Hereby, according to the throttle valve opening varied quantity ΔθTH/Δt, delay angle from an optimum ignition timing becomes large, and decreasing degree of engine output becomes also large. Therefore, gear change is performed without resistance and speed change shock is softened.

GB 524 883 describes an automatic transmission including a constant-mesh gear train wherein the ignition is disabled.

### SUMMARY OF THE INVENTION

It is an object of the invention to provide a control apparatus and a control method for an internal combustion engine, which can control torque without deteriorating driveability.

A first aspect of the invention relates to a control apparatus as defined in appended claim 1.

According to the first aspect of the invention, the control means performs the torque control by the method including changing the ignition timing of the internal combustion engine and changing the flow rate of air introduced into the internal combustion engine, and the torque control that is performed by the method of changing the ignition timing is prohibited, for example, in the case where the clutch is in the engaged state when shifting of the automatic transmission is performed. Thus, the torque is controlled, for example, by a method of changing only the flow rate of the air. When the torque control is performed by the method of changing only the flow rate of air, delay in response of the torque control occurs. Therefore, the torque of the internal combustion engine is gradually changed. Accordingly, even in the case where the clutch is in the engaged state, it is possible to suppress occurrence of shock. As a result, it is possible to provide the control apparatus for an internal combustion engine, which can control the torque without deteriorating driveability. According to the first aspect of the invention, for example, in the case where the clutch is in the engaged state when shifting of the automatic transmission is performed, the torque control is performed by the method of changing only the flow rate of the air. When the torque control is performed by the method of changing only the flow rate of the air, delay in response of the torque control occurs. Therefore, the torque of the internal combustion engine is gradually changed. Accordingly, even in the case where the clutch is in the engaged state, it is possible to suppress occurrence of shock.

According to a second aspect of the invention, in the control apparatus for an internal combustion engine according to the second aspect of the invention, the air flow rate control means includes means for performing the torque control so that the torque of the internal combustion engine is decreased.

According to the second aspect of the invention, the air flow rate control means gradually decrease the torque. Thus, when the clutch is disengaged, it is possible to suppress a sudden change in the torque input to the automatic transmission.
Therefore, it is possible to suppress occurrence of shock.

According to a third aspect of the invention, in the control apparatus for an internal combustion engine according to any one of the first aspect to the third aspect of the invention, the internal combustion engine is connected to the automatic transmission via a clutch; the control apparatus further includes means for detecting a state of the clutch; and the predetermined condition is a condition that the clutch is in an engaged state.

According to the third aspect of the invention, when the clutch is in the engaged state, the torque control that is performed by the method of changing the ignition timing. Thus, when the clutch is in the engaged state, it is possible to reduce the possibility that the torque is suddenly changed and shock occurs, and therefore driveability deteriorates.

According to a fourth aspect of the invention, in the control apparatus for an internal combustion engine according to the fourth aspect of the invention, the control means includes means for performing the torque control for the internal combustion engine by a method of changing the flow rate of the air and the ignition timing when the clutch is in a disengaged state.

According to the fourth aspect of the invention, in the case where the clutch is in the disengaged state, that is, in the case where shock may not occur if the torque is suddenly changed, the torque control is performed by the method of changing the flow rate of the air and the ignition timing. Thus, it is possible to control the torque of the internal combustion engine in quick response, while suppressing occurrence of shock.

A fifth aspect of the invention relates to a control method as defined in appended claim 5.

### BRIEF DESCRIPTION OF THE DRAWNGS

FIG 1 is a control block diagram showing a vehicle including a control apparatus for an internal combustion engine according to an embodiment of the invention;

FIG 2 is a control block diagram showing an engine controlled by the control apparatus for an internal combustion engine according to the embodiment of the invention;

FIG. 3 is a diagram showing a clutch; and

FIG. 4 is a flowchart showing a control structure of a program executed by an ECU of the control apparatus for an internal combustion engine according to the embodiment of the invention.

### DETAILED DESCRIPTION OF THE EXEMPLARY EMBODIMENTS

Hereinafter, an embodiment of the invention will be described with reference to the drawings. In the following description, the same components are denoted by the same reference numerals. Names and functions thereof are the same. Therefore, detailed description thereof will not be repeated.

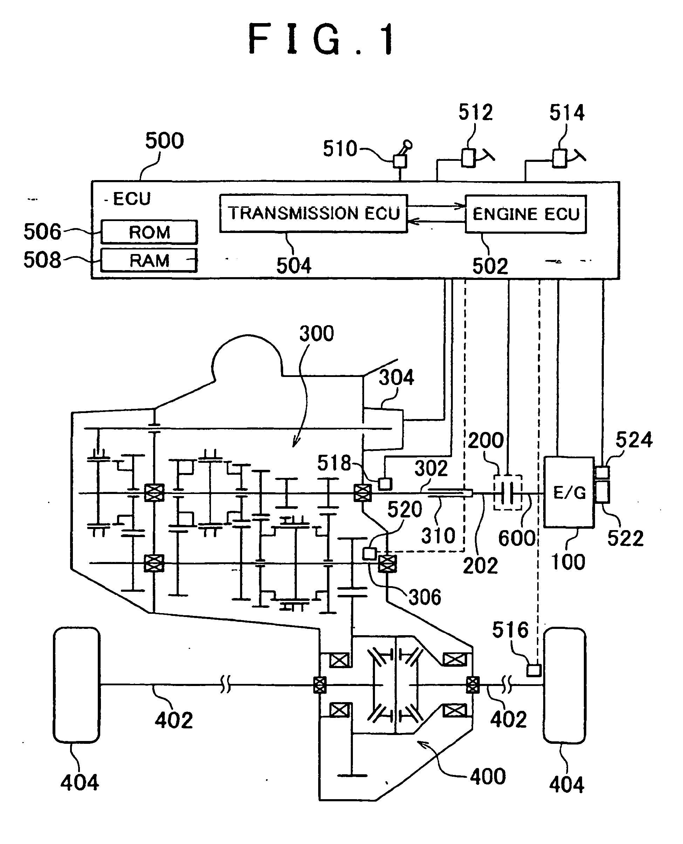

Referring to FIG. 1, description will be made of a vehicle which includes a control apparatus for an internal combustion engine according to an embodiment of the invention. The vehicle runs when driving force generated by an engine 100 is transmitted to a vehicle wheel 404 via a clutch 200, a transmission 300, a differential gear 400, and a drive shaft 402. The engine 100, the clutch 200, and the transmission 300 are controlled by an electronic control unit (hereinafter, referred to as "ECU") 500.

The control apparatus for an internal combustion engine according to the embodiment of the invention is realized, for example, by a program executed by the ECU 500.

The engine 100 is a gasoline engine. The clutch 200 is connected to a crankshaft 600 of the engine 100. A clutch output shaft 202 is connected to an input shaft 302 of the transmission 300 via a spline 310.

The transmission 300 includes a constant-mesh gear train. A shift speed of the transmission 300 is selected by sliding a shift fork shaft by an actuator 304. The actuator 304 may be operated by hydraulic pressure or by electric power. The shift speed may be selected by an actuator using a concentric slave cylinder.

The ECU 500 includes an engine ECU 502, a transmission ECU 504, read only memory (hereinafter, referred to as "ROM") 506, and random access memory (hereinafter, referred to as "RAM") 508. The engine ECU 502 controls the engine 100. The transmission ECU 504 controls the clutch 200 and the transmission 300. In this embodiment, the transmission ECU 504 controls the transmission 300 in a shifting control mode when shifting of the transmission 300 is performed. In the case where the transmission ECU 504 controls the transmission 300 in the shifting control mode, the transmission ECU 504 controls the clutch 200 so that the clutch 200 is disengaged, for example, when net torque of the engine 100 decreases to approximately 0 N·m. The net torque is torque obtained by subtracting friction torque of the engine 100, a load of auxiliary machinery, and the like from torque that is actually generated by the engine 100 (i.e., indicated engine torque). When the clutch 200 is in the disengaged state, the transmission ECU 504 controls the transmission 300 so as to change the shift speed. When change in the shift speed is completed, the transmission ECU 504 controls the clutch 200 so that the clutch 200 is engaged. However, the control of the clutch 200 and the transmission 300 in the shifting control mode is not limited to the control described above.

Signals are sent and received between the engine ECU 502 and the transmission ECU 504. In this embodiment, when the transmission ECU 504 controls the clutch 200 and the transmission 300 in the shifting control mode, the transmission ECU 504 sends, to the engine ECU 502, a signal indicating that the control in the shifting control mode is being performed. The ROM 506 stores a program executed by the ECU 500, a map used by the ECU 500, and the like. In this embodiment, the transmission ECU 504 determines whether to control the transmission 300 in the shifting control mode, based on a shift diagram stored in the ROM 506 or shift operation performed by a driver. The RAM 508 stores results of computation performed by the ECU 500.

The ECU 500 receives signals from a position sensor 510, an accelerator pedal operation amount sensor 512, a brake switch 514, a vehicle speed sensor 516, an input shaft rotational speed sensor 518, an output shaft rotational speed sensor 520, and a crank position sensor 524 which is provided so as to be opposed to an outer periphery of a timing rotor 522.

The position sensor 510 detects a shift position of a shift lever. The accelerator pedal operation amount sensor 512 detects an operation amount of an accelerator pedal. The brake switch 514 detects whether a brake pedal has been depressed. The vehicle speed sensor 516 detects a vehicle speed. The input shaft rotational speed sensor 518 detects a rotational speed of the input shaft of the transmission 300. The output shaft rotational speed sensor 520 detects a rotational speed of an output shaft of the transmission 300. The crank position sensor 524 detects the engine rotational speed.

The ECU 500 performs computation based on the signals sent from the aforementioned sensors, the programs and maps stored in the ROM 506, and the like. In this embodiment, the ECU 500 performs shifting (upshifting and downshifting) based on the shift operation performed by the driver. The ECU 500 may perform shifting based on operation of a switch provided in a steering wheel (not shown), instead of the shift operation.

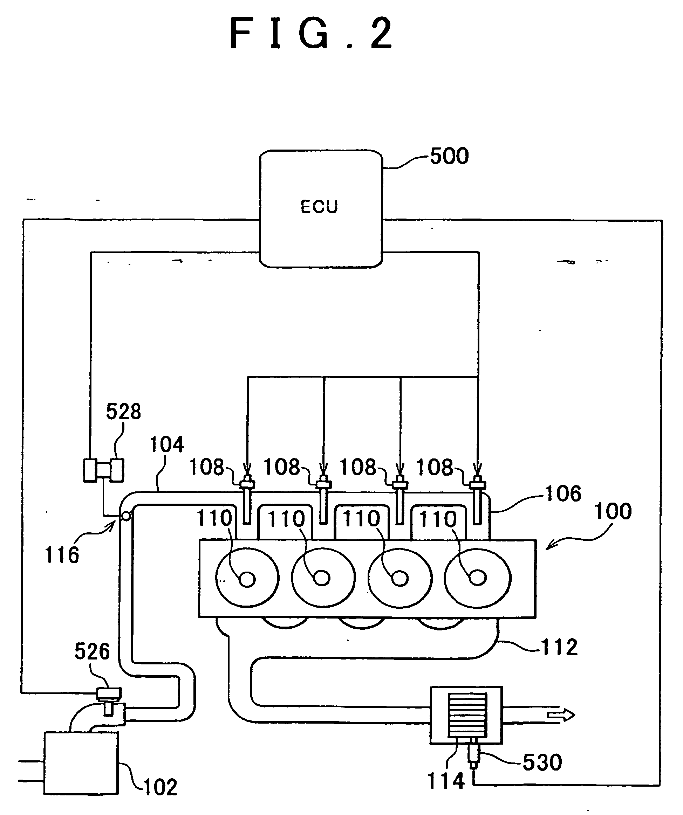

Referring to FIG. 2, the engine 100 will be further described. Air taken into the engine 100 is filtered by an air cleaner 102. Then, the air passes through an intake pipe 104 and an intake manifold 106, and is introduced into a combustion chamber together with fuel injected from an injector 108.

In the combustion chamber, air-fuel mixture is ignited by an ignition plug 110, and is burned. When the air-fuel mixture is burned, driving force is generated by the engine 100. The burned air-fuel mixture, that is, exhaust gas is guided to an exhaust manifold 112, and purified by a catalyst 144. Then, the exhaust gas is discharged to the outside of a vehicle.

The air introduced into the combustion chamber is controlled by a throttle valve 116. The throttle valve 116 is an electronically controlled throttle valve that is driven by a motor. An opening amount of the throttle valve 116 is controlled by the ECU 500. A flow rate of air is detected by an air flow meter 526, and a signal indicative of the result of detection is sent to the ECU 500. The opening amount of the throttle valve 116 is detected by a throttle opening amount sensor 528, and a signal indicative of the result of detection is sent to the ECU 500. A temperature TC of the catalyst 114 is detected by a temperature sensor 530, and a signal indicative of the result of detection is sent to the ECU 500. The catalyst temperature TC may be estimated based on the engine rotational speed, the load, a temperature of coolant, a temperature of intake air, and the like, instead of detecting the catalyst temperature TC using the temperature sensor 530.

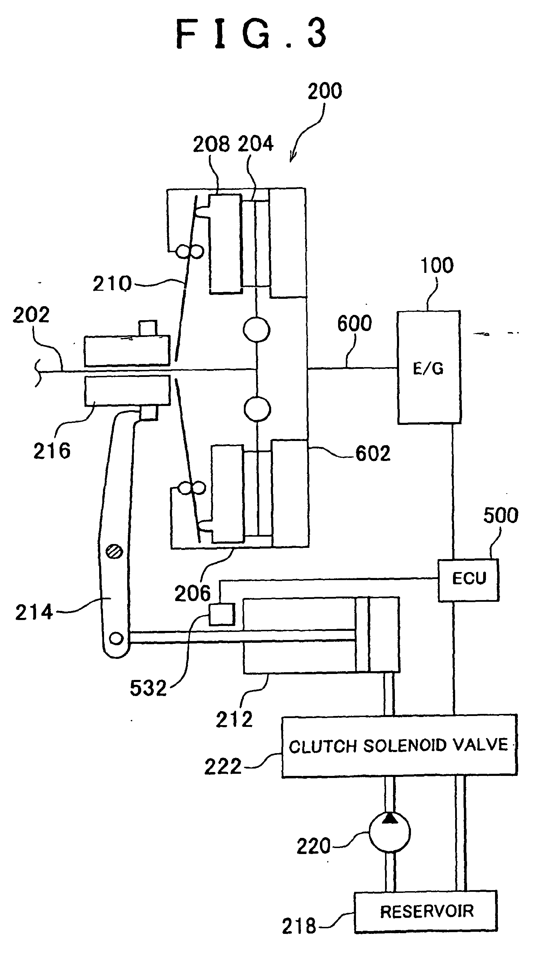

Referring to FIG. 3, the clutch 200 will be further described. The clutch 200 is a dry type single plate friction clutch. As shown in FIG. 3, the clutch 200 includes a clutch output shaft 202, a clutch disk 204 provided on the clutch output shaft 202, a clutch housing 206, a pressure plate 208 provided in the clutch housing 206, a diaphragm spring 210, a clutch release cylinder 212, a release fork 214, and a release sleeve 216.

When the diaphragm spring 210 applies force to the pressure plate 208 rightward in FIG. 3, the clutch disk 204 is pressed to a fly wheel 602 fitted to the crankshaft 600 of the engine 100, and thus the clutch is engaged.

When the clutch release cylinder 212 moves the release sleeve 216 rightward in FIG. 3 via the release fork 214, an inner end portion of the diaphragm spring 210 is moved rightward in FIG. 3. When the inner end portion of the diaphragm spring 210 is moved rightward in FIG. 3, the pressure plate 208 is moved leftward in FIG. 3, and the clutch disk 204 is separated from the fly wheel 602. Thus, the clutch is disengaged.

The clutch release cylinder 212 is operated when hydraulic pressure of hydraulic oil pumped up by a hydraulic pump 220 from a reservoir 218 is supplied to the clutch release cylinder 212 via a clutch solenoid valve 222. The clutch solenoid valve 222 switches between supply of the hydraulic pressure to the clutch release cylinder 212 and discharge of the hydraulic pressure from the clutch release cylinder 212. The clutch solenoid valve 222 is controlled by the ECU 500.

When the hydraulic pressure is supplied to the clutch release cylinder 212, a piston of the clutch release cylinder 212 is moved leftward in FIG. 3, and the release sleeve 216 is moved rightward in FIG. 3. Thus, the clutch is disengaged.

The position of the piston of the clutch release cylinder 212 (i.e., clutch stroke) is detected by a clutch stroke sensor 532. A signal indicative of the result of detection performed by the clutch stroke sensor 532 is sent to the ECU 500.

The ECU 500 detects whether the clutch 200 is in a disengaged state, in an engaged state, or in a semi-engaged state, based on the signal sent from the clutch stroke sensor 536. The clutch 200 may be operated by electric power.

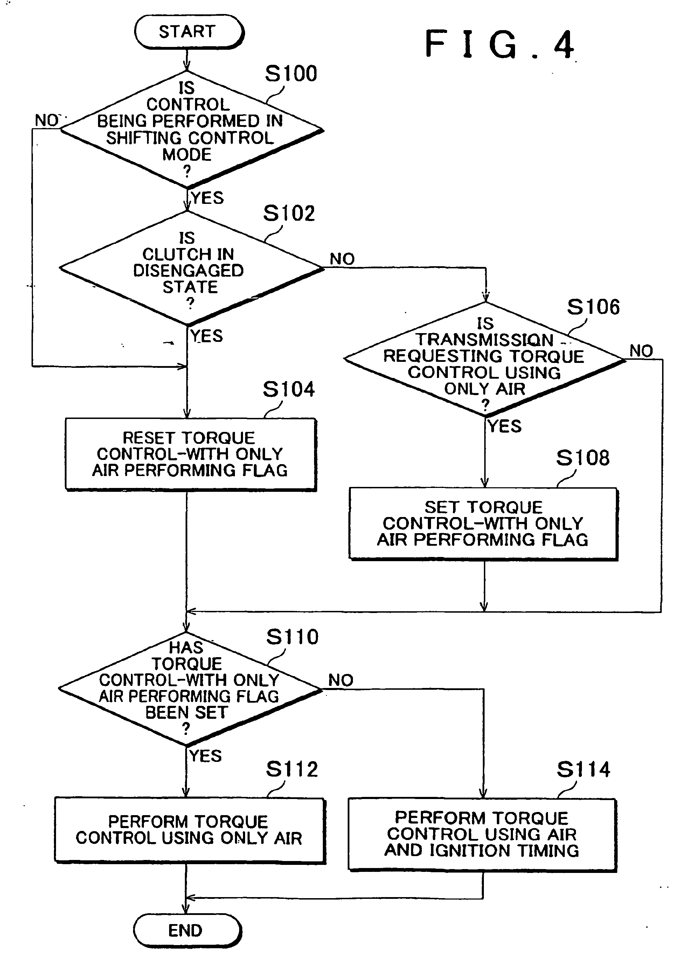

Referring to FIG. 4, description will be made of a control structure of a program executed by the ECU 500 of the control apparatus for an internal combustion engine according to the embodiment of the invention.

In step S 100, the ECU 500 determines whether the clutch 200 and the transmission 300 are being controlled in the shifting control mode. Whether the clutch 200 and the transmission 300 are being controlled in the shifting control mode is determined based on the signal sent from the transmission ECU 504 to the engine ECU 502. When the transmission 300 is being controlled in the shifting control mode ("YES" in step S 100), step S 102 is performed. When the transmission 300 is not being controlled in the shifting control mode ("NO" in step S100), step S 104 is performed.

In step S 102, the ECU 500 determines whether the clutch 200 is in the disengaged state based on the signal sent from the clutch stroke sensor 532. When the clutch 200 is in the disengaged state ("YES" in step S102), step S 104 is performed. When the clutch 200 is not in the disengaged state ("NO" in step S102), step S 106 is performed.

In step S 104, the ECU 500 resets a torque control-with only air performing flag. In step S 106, the ECU 500 determines whether the transmission 300 side is requesting torque control using only air. Whether the transmission 300 side is requesting torque control using only air is determined based on the signal sent from the transmission ECU 504 to the engine ECU 502. The transmission ECU 504 requests the torque control using only air, for example, in a case where shifting is performed at low speed while the engine torque is gradually decreased so as to suppress shift shock during a period from start of disengagement of the clutch 200 until completion of disengagement of the clutch 200. When the transmission ECU 504 requests the torque control using only air, the transmission ECU 504 sends the signal to the engine ECU 502. When the torque control using only air is requested ("YES" in step S 106), step S108 is performed. When the torque control using only air is not requested ("NO" in step S 106), step S 110 is performed.

In step S 108, the ECU 500 sets the torque control-with only air performing flag. In step S110, the ECU 500 determines whether the torque control-with only air performing flag has been set. When the torque control-with only air performing flag has been set ("YES" in step S110), step S112 is performed. When the torque control-with only air performing flag has not been set ("NO" in step S110), step S114 is performed.

In step S112, the ECU 500 prohibits torque control using ignition timing, and controls the torque of the engine 100 using only air, that is, using only the opening amount of the throttle valve 116. In step S 114, the ECU 500 controls the torque of the engine 100 using air and the ignition timing.

Description will be made of operation of the ECU 500 of the control apparatus for an internal combustion engine according to the embodiment of the invention, based on the aforementioned structure and the aforementioned flowchart.

When shifting is not being performed ("NO" in step S 100), the torque control-with only air performing flag is reset in step S 104. Therefore, the torque control is performed using air and the ignition timing, in quick response to the operating state of the vehicle, for example, when the engine is idling, when knocking occurs, when the catalyst 114 is warmed up, and when the accelerator pedal is operated ("NO" in step S 110, and step S 114 is performed).

When it is determined that shifting needs to be performed based on the shift diagram, or when shifting is requested by shift operation performed by the driver, the transmission 300 is controlled in the shifting control mode ("YES" in step S 100). Then, it is determined whether the clutch 200 is in the disengaged state in step S102.

In a case where the clutch 200 is not in the disengaged state, and is in the engaged state (including the semi-engaged state) ("NO" in step S102), when the transmission 300 side is requesting the torque control using only air ("YES" in step S 106), the torque control-with only air performing flag is set in step S108.

When the torque control-with only air performing flag has been set ("YES" in step S 110), the torque control using the ignition timing is prohibited, and the torque control using air, that is, the torque control using only the opening amount of the throttle valve 116 is performed in step S 112. At this time, the torque of the engine 100 is decreased so as to be equal to the torque requested by the transmission 300 side.

In the case where the torque control is performed using only air, even when the opening amount of the throttle valve 116 is changed, the flow rate of air is not changed promptly. Therefore, response delay occurs. Accordingly, the torque is gradually decreased. As a result, when the clutch 200 is in the engaged state, a sudden change in the torque is suppressed, and therefore shift shock is suppressed.

When the torque has been sufficiently decreased, and the clutch 200 has been disengaged in order to change the shift speed ("YES" in step S 102), the torque control-with only air performing flag is reset in step S104. Thus, the torque control using air and the ignition timing is resumed ("NO" in step S110, and step S 114 is performed). Thus, the torque control is performed in quick response to the operating state of the vehicle. The condition for resuming the torque control using air and the ignition timing may include only a condition that the clutch 200 is in the disengaged state.

As described above, in the control apparatus for an internal combustion engine according to the embodiment of the invention, in the case where the clutch is in the engaged state during shifting of the transmission and the transmission side is requesting the torque control using only air, the ECU prohibits the torque control using the ignition timing, and performs the torque control using only air. Thus, it is possible to gradually decrease the torque, and to reduce the possibility that driveability deteriorates due to occurrence of shock.

Thus, the embodiment of the invention that has been disclosed in the specification is to be considered in all respects as illustrative and not restrictive. The scope of the invention is defined by claims.

## Claims

1. A control apparatus for an internal combustion engine (100) which is connected to an automatic transmission (300) including a constant-mesh gear train, comprising:
control means (500) for performing torque control for the internal combustion engine (100) by a method including changing ignition timing of the internal combustion engine (100), and changing a flow rate of air introduced into the internal combustion engine (100); **characterized by**
prohibition means (500) for prohibiting the torque control that is performed by a method of changing the ignition timing, in a case where a predetermined condition is satisfied when shifting of the automatic transmission (300) is performed; wherein the control means (500) further includes:
air flow rate control means for performing the torque control for the internal combustion engine (100) by a method of changing only the flow rate of the air introduced into the internal combustion engine (100), in the case where the predetermined condition is satisfied when shifting of the automatic transmission (300) is performed.

2. The control apparatus according to claim 1, wherein the air flow rate control means includes means for performing the torque control for the internal combustion engine (100) so that the torque of the internal combustion engine (100) is decreased.

3. The control apparatus according to claim 1 or 2, wherein:
the internal combustion engine (100) is connected to the automatic transmission (300) via a clutch (200);
the control apparatus further includes means for detecting a state of the clutch (200); and
the predetermined condition is a condition that the clutch (200) is in an engaged state.

4. The control apparatus according to claim 3, wherein the control means (500) includes means for performing the torque control for the internal combustion engine (100) by a method of changing the flow rate of the air and the ignition timing when the clutch (200) is in a disengaged state.

5. A control method for an internal combustion engine (100) which is connected to an automatic transmission (300) including a constant-mesh gear train, comprising:
performing torque control for the internal combustion engine (100) by a method including changing ignition timing of the internal combustion engine (100), and changing a flow rate of air introduced into the internal combustion engine (100); **characterized by**:
prohibiting the torque control that is performed by a method of changing the ignition timing, in a case where a predetermined condition is satisfied when shifting of the automatic transmission (300) is performed; wherein:
the torque control for the internal combustion engine (100) is performed by a method of changing only the flow rate of the air introduced into the internal combustion engine (100), in the case where the predetermined condition is satisfied when shifting of the automatic transmission (300) is performed.

6. The control method according to claim 5, wherein:
the internal combustion engine (100) is connected to the automatic transmission (300) via a clutch (200);
a state of the clutch (200) is detected; and
the predetermined condition is a condition that the clutch (200) is in an engaged state.

7. The control method according to claim 6, wherein the torque control for the internal combustion engine (100) is performed by a method of changing the flow rate of the air and the ignition timing when the clutch (200) is in a disengaged state.

## Patentansprüche

1. Steuervorrichtung für einen Verbrennungsmotor (100), der mit einem automatischen Getriebe (300) mit einem Dauereingriffs-Getriebezug verbunden ist, aufweisend:
ein Steuermittel (500) zum Durchführen einer Drehmomentsteuerung für den Verbrennungsmotor (100) anhand eines Verfahrens, das eine Änderung eines Zündzeitpunkts des Verbrennungsmotors (100) und eine Änderung eines Volumenstroms von Luft, die in den Verbrennungsmotor (100) eingeführt wird, beinhaltet; **gekennzeichnet durch**
ein Verhinderungsmittel (500) zum Verhindern der Drehmomentsteuerung, die anhand eines Verfahrens durchgeführt wird, bei dem der Zündzeitpunkt geändert wird, in einem Fall, wo eine vorgegebene Bedingung erfüllt ist, wenn ein Schalten des automatischen Getriebes (300) durchgeführt wird; wobei das Steuermittel (500) ferner aufweist:
ein Volumenstrom-Steuermittel zum Durchführen der Drehmomentsteuerung für den Verbrennungsmotor (100) anhand eines Verfahrens, bei dem in einem Fall, wo die vorgegebene Bedingung erfüllt ist, wenn ein Schalten des automatischen Getriebes (300) durchgeführt wird, nur der Volumenstrom der Luft, die in den Verbrennungsmotor (100) gesaugt wird, geändert wird.

2. Steuervorrichtung nach Anspruch 1, wobei das Volumenstrom-Steuermittel ein Mittel aufweist zum Durchführen der Drehmomentsteuerung für den Verbrennungsmotor (100) derart, dass das Drehmoment des Verbrennungsmotors (100) gesenkt wird.

3. Steuervorrichtung nach Anspruch 1 oder 2, wobei:
der Verbrennungsmotor (100) über eine Kupplung (200) mit dem automatischen Getriebe (300) verbunden ist;
die Steuervorrichtung ferner ein Mittel aufweist zum Erfassen eines Kupplungszustands (200); und
die vorgegebene Bedingung verlangt, dass die Kupplung (200) in einem eingerückten Zustand ist.

4. Steuervorrichtung nach Anspruch 3, wobei das Steuermittel (500) ein Mittel aufweist zum Durchführen der Drehmomentsteuerung für den Verbrennungsmotor (100) anhand eines Verfahrens, bei dem der Volumenstrom der Luft und der Zündzeitpunkt geändert werden, wenn die Kupplung (200) in einem ausgerückten Zustand ist.

5. Steuerverfahren für einen Verbrennungsmotor (100), der mit einem automatischen Getriebe (300) mit einem Dauereingriffs-Getriebezug verbunden ist, umfassend:
Durchführen einer Drehmomentsteuerung für den Verbrennungsmotor (100) anhand eines Verfahrens, das eine Änderung eines Zündzeitpunkts des Verbrennungsmotors (100) und eine Änderung eines Volumenstroms von Luft, die in den Verbrennungsmotor (100) eingeführt wird, beinhaltet; **gekennzeichnet durch** Verhindern der Drehmomentsteuerung, die anhand eines Verfahrens durchgeführt wird, bei dem der Zündzeitpunkt geändert wird, in einem Fall, wo eine vorgegebene Bedingung erfüllt ist, wenn ein Schalten des automatischen Getriebes (300) durchgeführt wird; wobei:
die Drehmomentsteuerung für den Verbrennungsmotor (100) anhand eines Verfahrens durchgeführt wird, bei dem in einem Fall, wo die vorgegebene Bedingung erfüllt ist, wenn ein Schalten des automatischen Getriebes (300) durchgeführt wird, nur der Volumenstrom der Luft, die in den Verbrennungsmotor (100) gesaugt wird, geändert wird.

6. Steuervorrichtung nach Anspruch 5, wobei:
der Verbrennungsmotor (100) über eine Kupplung (200) mit dem automatischen Getriebe (300) verbunden ist;
ein Zustand der Kupplung (200) erfasst wird; und
die vorgegebene Bedingung verlangt, dass die Kupplung (200) in einem eingerückten Zustand ist.

7. Steuerverfahren nach Anspruch 6, wobei die Drehmomentsteuerung für den Verbrennungsmotor (100) anhand eines Verfahrens durchgeführt wird, bei dem der Volumenstrom der Luft und der Zündzeitpunkt geändert werden, wenn die Kupplung (200) im ausgerückten Zustand ist.

## Revendications

1. Dispositif de commande pour un moteur à combustion interne (100) qui est accouplé à une transmission automatique (300) incluant un train d'engrenages en prise constante, comprenant :
un moyen (500) de commande destiné à effectuer une commande de couple pour le moteur à combustion interne (100) par un procédé incluant la modification du calage de l'allumage du moteur à combustion interne (100), et la modification du débit d'air introduit dans le moteur à combustion interne (100),
**caractérisé par** un moyen (500) d'interdiction destiné à interdire que la commande de couple se fasse par un procédé de modification du calage de l'allumage, dans le cas où une condition prédéterminée est satisfaite lorsqu'un changement de vitesse de la transmission automatique (300) est effectué, dans lequel le moyen (500) de commande inclut en outre :
un moyen de commande de débit d'air destiné à effectuer la commande de couple pour le moteur à combustion interne (100) par un procédé consistant à modifier seulement le débit d'air de l'air introduit dans le moteur à combustion interne (100), dans le cas où la condition prédéterminée est satisfaite lorsqu'un changement de vitesse de la transmission automatique (300) est effectué.

2. Dispositif de commande selon la revendication 1, dans lequel le moyen de commande de débit d'air inclut un moyen destiné à effectuer la commande de couple pour le moteur à combustion interne (100) de façon que le couple du moteur à combustion interne (100) diminue.

3. Dispositif de commande selon la revendication 1 ou 2,
dans lequel le moteur à combustion interne (100) est accouplé à la transmission automatique (300) via un embrayage (200),
dans lequel le dispositif de commande inclut en outre un moyen destiné à détecter l'état de l'embrayage (200), et
dans lequel la condition prédéterminée est la condition que l'embrayage (200) est à l'état embrayé.

4. Dispositif de commande selon la revendication 3, dans lequel le moyen (500) de commande inclut un moyen destiné à effectuer la commande de couple pour le moteur à combustion interne (100) par un procédé de modification du débit d'air de l'air et du calage de l'allumage lorsque l'embrayage (200) est à l'état débrayé.

5. Procédé de commande pour un moteur à combustion interne (100) qui est accouplé à une transmission automatique (300) incluant un train d'engrenages en prise constante, comprenant :
l'exécution d'une commande de couple pour le moteur à combustion interne (100) par un procédé incluant la modification du calage de l'allumage du moteur à combustion interne (100), et la modification du débit d'air introduit dans le moteur à combustion interne (100),
**caractérisé par** l'interdiction de la commande de couple qui est effectué par un procédé de modification du calage de l'allumage, dans le cas où une condition prédéterminée est satisfaite lorsqu'un changement de vitesse de la transmission automatique (300) est effectué,
dans lequel la commande de couple pour le moteur à combustion interne (100) se fait par un procédé consistant à modifier seulement le débit d'air de l'air introduit dans le moteur à combustion interne (100), dans le cas où la condition prédéterminée est satisfaite lorsqu'un changement de vitesse de la transmission automatique (300) est effectué.

6. Procédé de commande selon la revendication 5,
dans lequel le moteur à combustion interne (100) est accouplé à la transmission automatique (300) via un embrayage (200),
dans lequel on détecte l'état de l'embrayage (200), et
dans lequel la condition prédéterminée est la condition que l'embrayage (200) est à l'état embrayé.

7. Procédé de commande selon la revendication 6, dans lequel la commande de couple pour le moteur à combustion interne (100) se fait par un procédé de modification du débit d'air de l'air et du calage de l'allumage lorsque l'embrayage (200) est à l'état débrayé.
